# EUROPÄISCHE PATENTSCHRIFT

(11) **EP 1 260 037 B1**
(45) Veröffentlichungstag und Bekanntmachung des Hinweises auf die Patenterteilung: **10.08.2005**
(21) Anmeldenummer: 01925295.6
(22) Anmeldetag: 23.02.2001
(51) Int. Cl.: H04B 7/26, H04J 3/06

(54) **VERFAHREN, MOBILFUNKSYSTEM UND STATION ZUM BETRIEB EINER VERBINDUNG ZWISCHEN ZWEI STATIONEN DES MOBILFUNKSYSTEMS**
METHOD, MOBILE RADIOTELEPHONE SYSTEM, AND STATION FOR OPERATING A CONNECTION BETWEEN TWO STATIONS OF THE MOBILE RADIOTELEPHONE SYSTEM
PROCEDE, SYSTEME DE RADIOTELEPHONIE ET STATION POUR CONDUIRE UNE LIAISON ENTRE DEUX STATIONS D UN SYSTEME DE RADIOTELEPHONIE

(30) Priorität: 28.02.2000 DE 10009401
(43) Veröffentlichungstag der Anmeldung: 27.11.2002
(73) Patentinhaber: SIEMENS AKTIENGESELLSCHAFT, 80333 München (DE)
(72) Erfinder: KÖHN, Reinhard, 14197 Berlin (DE); PURAT, Marcus, 12209 Berlin (DE); SCHNIEDENHARN, Jörg, 13587 Berlin (DE); TRAYNARD, Jean-Michel, 81667 München (DE); ULRICH, Thomas, 67098 Bad Dürkheim (DE)
(86) Internationale Anmeldenummer: PCT/DE2001/000710
(87) Internationale Veröffentlichungsnummer: WO 2001/065729

(56) Entgegenhaltungen:
- WO-A-96/08885
- WO-A-98/03030
- WO-A-99/60742
- US-A- 5 479 409
- US-A- 5 959 980
- PATENT ABSTRACTS OF JAPAN vol. 007, no. 115 (E-176), 19. Mai 1983 (1983-05-19) & JP 58 036034 A (NIPPON DENSHIN DENWA KOSHA), 2. März 1983 (1983-03-02)

## Beschreibung

Die Erfindung betrifft ein Verfahren, ein Mobilfunksystem sowie eine Station zur Ermittlung einer Vorhaltezeit für eine Verbindung zwischen zwei Stationen.

In mobilen Kommunikationssystemen mit Zeitmultiplexkomponente (hierunter sind reine TDMA-Systeme sowie auch solche mit weiteren Multiplexkomponente, wie beispielsweise TD-CDMA gemeint) muß die Signallaufzeit zwischen der Basisstation und der Mobilstation bei der Bestimmung der Zeitlage von Aussendungen der Mobilstation berücksichtigt werden. Da sich die Mobilstation auf die Basisstation synchronisieren muß, ist es erforderlich, dass sie ihre Aussendungen um eine Vorhaltezeit (Timing Advance) vor den von ihr empfangenen Funkblöcken überträgt. Durch die Vorhaltezeit wird die Laufzeit zwischen Mobilstation und Basisstation ausgeglichen, so dass die Funkblöcke in der Basisstation im richtigen Zeitschlitz eintreffen. Beim Aufbau der Verbindung oder bei einer Übergabe der Verbindung auf eine neue Basisstation muß der Wert der Vorhaltezeit normalerweise bekannt sein, bevor die Mobilstation die zu übertragenden Daten zur Basisstation aussendet. Bei der Übergabe der Verbindung (Hand Over) von der alten auf die neue Basisstation lässt sich der neue Wert der Vorhaltezeit aus dem alten Wert berechnen, sofern beide Basisstationen aufeinander synchronisiert sind. Dies ist nicht der Fall, wenn der Wechsel zwischen nicht synchronisierten Basisstationen stattfindet. Ein solcher Fall wäre beispielsweise der Wechsel von einem FDD-(Frequency Division Duplex)System auf ein TDD-(Time Division Duplex)System.

Ist die Vorhaltezeit noch unbekannt, kann bei herkömmlichen Mobilfunksystemen die Mobilstation nur in speziellen Zeitschlitzen, in denen der sogenannte RACH (Random Access Channel) übertragen wird, spezielle Zugangsfunkblöcke (Access Bursts) aussenden. Anhand der Access Bursts ist die empfangene Basisstation in der Lage, die auftretende Signallaufzeit zu ermitteln und einen entsprechenden Wert für die Vorhaltezeit zu ermitteln. Diesen Wert der Vorhaltezeit übermittelt die Basisstation dann an die Mobilstation. Daraufhin ist die Mobilstation in der Lage, unter Berücksichtigung der Vorhaltezeit die Übertragung regulärer Funkblöcke in beliebigen Zeitschlitzen aufzunehmen.

Dadurch, dass die Verwendung des RACH zur Ermittlung der Vorhaltezeit notwendig ist, bevor eine Übertragung der eigentlichen Nutzdaten erfolgen kann, kommt es zu einer Verzögerung des verbindungsaufbaus. Diese Verzögerung wird noch dadurch vergrößert, dass es auf dem RACH, auf den jede Mobilstation wahlfrei zugreifen kann, zu Kollisionen solcher Zugriffe kommen kann.

Aus WO 96/08885 A ist ein time division multiplex/time division multiple access (TDM/TDMA) Kommunikationssystem bekannt, in dem vor Verbindungsaufbau kurze Pakete ausgesandt werden, um die Vorhaltezeit zu bestimmen. Die kurzen Pakete enthalten Pilotsignale. Nach Bestimmung der Vorhaltezeit und nach Verbindungsaufbau werden längere Pakete übertragen. Die längeren Pakete enthalten Nutzdaten (user data).

Der Erfindung liegt die Aufgabe zugrunde, eine andere Art der Ermittlung der Vorhaltezeit zu ermöglichen. Diese Aufgabe wird mit dem Verfahren gemäß Anspruch 1, dem Mobilfunksystem gemäß Anspruch 11 sowie der Station für ein Mobilfunksystem gemäß Anspruch 12 gelöst. Vorteilhafte Aus- und Weiterbildungen der Erfindung sind Gegenstand der abhängigen Ansprüche.

Die Erfindung sieht vor, dass während der Ermittlung der Vorhaltezeit die von der ersten Station zur zweiten Station zu übertragenden Daten ohne die Vorhaltezeit in Form kurzer Funkblöcke und nach der Ermittlung der Vorhaltezeit unter Berücksichtigung der Vorhaltezeit in Form langer Funkblöcke übertragen werden, die länger als die kurzen Funkblöcke sind, wobei sowohl die kurzen Funkblöcke als auch die langen Funkblöcke von der ersten Station in dem der Verbindung zugewiesenen Kanal übertragen werden.

Bei der Erfindung wird also bereits vor dem Bekanntsein der Vorhaltezeit für die Verbindung zwischen der Mobilstation und der Basisstation derselbe Kanal benutzt, der nach der Ermittlung der Vorhaltezeit für die reguläre Datenübertragung dieser Verbindung benutzt wird. Da es sich um einen individuell dieser Verbindung zugewiesenen Kanal handelt, kann es während der Ermittlung der Vorhaltezeit nicht zu Kollisionen mit Funkblöcken anderer Verbindungen kommen, wie dies bei der Verwendung des RACH zur Ermittlung der Vorhaltezeit der Fall wäre. Der individuelle Kanal der Verbindung unterscheidet sich von anderen Kanälen im Falle eines TD/CDMA-Systems beispielsweise hinsichtlich seines Zeitschlitzes und seines Spreizcodes. Dadurch, dass die kurzen Funkblöcke kürzer als die langen Funkblöcke sind, die nach der Ermittlung der Vorhaltezeit unter Berücksichtigung der Vorhaltezeit ausgesendet werden, ist gewährleistet, dass die kurzen Funkblöcke auch ohne Kenntnis der Vorhaltezeit noch im richtigen Zeitschlitz im Empfänger empfangen werden. Die Erfindung ermöglicht die sofortige Übertragung von Verbindungsdaten bereits mit den ersten Funkblöcken, so dass beispielsweise im Falle einer Verbindungsübergabe eine Unterbrechung der Datenübertragung während der Ermittlung der Vorhaltezeit nicht notwendig ist.

Die Erfindung ermöglicht vorteilhaft, dass die Vorhaltezeit von der zweiten Station (beispielsweise der Basisstation) anhand der von der ersten Station (beispielsweise der Mobilstation) zu ihr übertragenen kurzen Funkblöcke ermittelt wird.

Da die kurzen Funkblöcke kürzer als die langen Funkblöcke sind, ist es nicht möglich, in beiden Fällen die gleiche Datenmenge innerhalb eines Zeitschlitzes zu übertragen. Daher ist es nach einer Weiterbildung der Erfindung vorgesehen, die Codierrate einer Quellencodierung der zu übertragenden Daten für die in den kurzen Funkblöcken zu übertragenden Daten geringer zu wählen als für die in den langen Funkblöcken zu übertragenden Daten. Diese Vorgehensweise eignet sich beispielsweise gut für die Übertragung von Sprachdaten. Die Verringerung der Codierrate für die kurzen Funkblöcke hat in diesem Fall eine Verringerung der Qualität der übertragenen Sprachdaten zur Folge. Unter Verringerung der Codierrate der Quellencodierung ist hierbei eine Reduzierung der pro Zeiteinheit erzeugten quellencodierten Daten zu verstehen. Es wird beispielsweise aus einem Sprachsignal statt eines Datenstroms von 15kbit/Sekunde nur die Hälfte dieses Wertes erzielt.

Es kann auch die Codierrate einer Kanalcodierung der zu übertragenden Daten für die in den kurzen Funkblöcken zu übertragenden Daten größer als für die in den langen Funkblöcken zu übertragenden Daten gewählt werden. Dies kann insbesondere durch Reduzierung der im Rahmen der Kanalcodierung erfolgenden Fehlerschutzcodierung der zu übertragenden Daten geschehen. Unter Codierrate der Kanalcodierung wird hier das Verhältnis von quellencodierten Daten zu kanalcodierten Daten verstanden. Durch die Vergrößerung der Codierrate der Kanalcodierung wird, wie bereits erwähnt, der Fehlerschutz bzw. die Datensicherheit für die zu übertragenden Daten verringert. Allerdings muss dafür die pro Zeitschlitz zu übertragende Menge von quellencodierten Nutzdaten nicht unbedingt kleiner sein als im Falle der langen Funkblöcke.

Um die im Falle einer für die ersten Funkblöcke erhöhten Codierrate der Kanalcodierung die damit verbundene schlechtere Fehlercodierung der übertragenen Daten auszugleichen, ist es vorteilhaft, für die kurzen Funkblöcke die Sendeleistung im Vergleich zu den langen Funkblöcken zu erhöhen. Dies bedingt eine geringere Fehleranfälligkeit der zu übertragenden Daten, so dass die in geringerem Umfang auftretenden Fehler auch durch die geringere Fehlerschutzcodierung noch korrigiert werden können.

Im Falle eines TD/CDMA-Mobilfunksystems wird jeder Funkblock üblicherweise mit einer für die Verbindung individuellen Trainingssequenz (Mitambel) versehen, die im Empfänger eine Kanalschätzung ermöglicht. Dabei sind die Trainingssequenzen oftmals durch unterschiedliche Rotationen aus einem gemeinsamen Trainingssequenzgrundcode erzeugt. Eine Weiterbildung der Erfindung sieht für diesen Fall vor, dass während der Ermittlung der Vorhaltezeit, also während der Aussendung der kurzen Funkblöcke, die ohne Kenntnis der Vorhaltezeit erfolgt, höchstens jede zweite in Richtung der Rotation aufeinanderfolgende Trainingssequenz für jeweils eine in den jeweiligen Zeitschlitzen unterhaltende Verbindung benutzt wird. Indem die Aussendung der kurzen Funkblöcke ohne die Vorhaltezeit erfolgt, kann es dazu kommen, dass aufgrund der dadurch eintretenden zeitlichen Verschiebung im Empfänger die Rotation der betreffenden Trainingssequenz gegenüber dem Trainingssequenzgrundcode wieder, zumindest teilweise, aufgehoben wird. Hierdurch kann es passieren, dass die Trainingssequenz der kurzen Funkblöcke im Empfänger mit einer anderen Trainingssequenz, die eigentlich eine andere Rotation gegenüber dem Trainingssequenzgrundcode aufweist, verwechselt wird. Wird jedoch bei Aussendung der ersten Funkblöcke nur jede zweite, jede dritte oder noch weniger Trainingssequenzen in der jeweiligen Funkzelle verwendet, kommt es im Empfänger nicht zum Empfang von Trainingssequenzen, die sich bezüglich ihrer Rotation gegenüber dem Trainingssequenzgrundcode nur relativ wenig unterscheiden. Daher ist dann die Verwechslungsgefahr zwischen gleichzeitig verwendeten Trainingssequenzen aufgrund der Signallaufzeit zwischen Mobilstation und Basisstation vermindert.

Der Verbindung zwischen den beiden Stationen können auch wenigstens zwei unterschiedliche Dienste, wie ein Signalisierungsdienst und ein Sprachdienst zugeordnet sein, die über denselben Kanal übertragen werden. Nach einer Weiterbildung der Erfindung wird in den kurzen Funkblöcken dann nur ein Teil der Dienste der Verbindung übertragen, beispielsweise nur die Signalisierungsinformationen, während in den langen Funkblöcken beide Dienste, also auch die Sprachdaten übertragen werden. Auch dies ermöglicht das Aufrechterhalten der Verbindung mittels der kurzen Funkblöcke, die ja eine kleinere Übertragungskapazität als die langen Funkblöcke bedingen.

Die Erfindung wird im folgenden anhand von in den Figuren dargestellten Ausführungsbeispielen näher erläutert. Es zeigen:
- Figur 1: einen Ausschnitt eines erfindungsgemäßen Mobilfunksystems,
- Figur 2: die zeitliche Lage von Empfangs- und Sendefunkblökken einer Mobilstation und einer Basisstation des Systems aus Figur 1,
- Figur 3: einen Quellencodierer und einen Kanalcodierer innerhalb einer Codierungseinheit einer Mobilstation,
- Figur 4: unterschiedliche Trainingssequenzen für eine Kanalschätzung durch einen Empfänger und
- Figur 5: einen Funkblock mit einer der Trainingssequenzen aus Figur 4.

Die Erfindung wird im folgenden anhand eines TD/CDMA-Mobilfunksystems, wie es das UMTS-TDD-System darstellt, erläutert, obwohl sie auch auf andere Systeme mit TDMA-Komponente anwendbar ist.

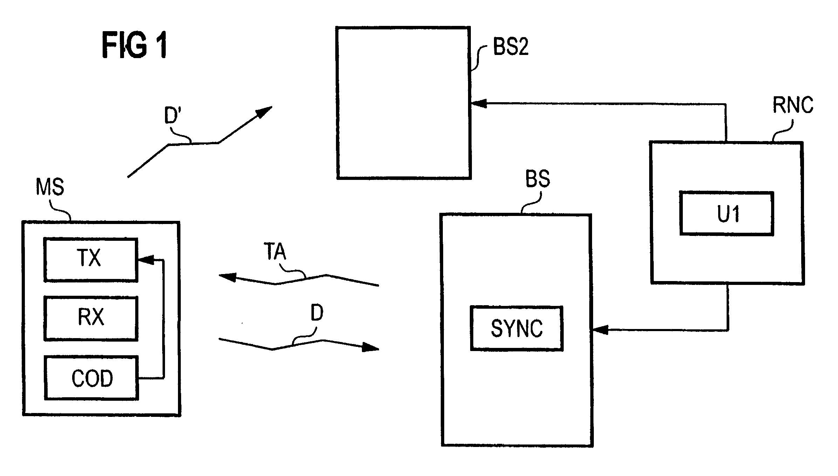

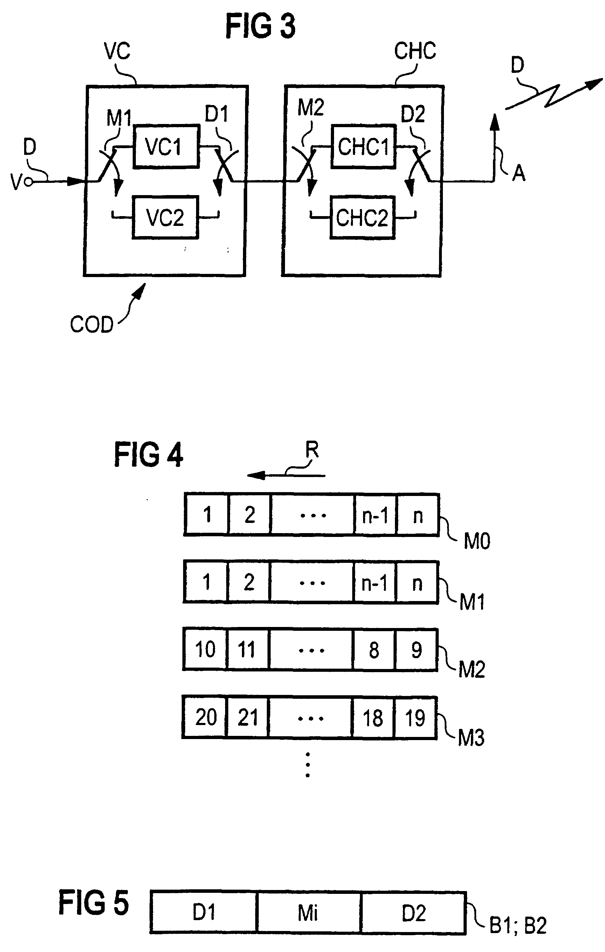

Figur 1 zeigt eine Mobilstation MS sowie zwei Basisstationen BS, BS2 des Mobilfunksystems. Die erste Basisstation BS ist einem TDD-System zugeordnet, während die zweite Basisstation BS2 einem FDD-System angehört. Im folgenden wird die Übergabe einer Verbindung, die zunächst zwischen der Mobilstation MS und der zweiten Basisstation BS2 des FDD-Systems besteht, auf die erste Basisstation BS des TDD-Systems betrachtet. Die Mobilstation MS überträgt zunächst Daten D' der Verbindung zur zweiten Basisstation BS2 und nach der Übergabe der Verbindung überträgt sie Daten D der Verbindung zur ersten Basisstation BS. Die Mobilstation MS enthält eine Sendeeinheit TX, eine Empfangseinheit RX sowie eine Codierungseinheit COD, auf die bezüglich Figur 3 noch eingegangen wird. Die Basisstation BS weist eine Synchronisierungseinheit SYNCH auf, die zur Sychronisierung der Stationen MS, BS eine Vorhaltezeit (Timing Advance) TA ermittelt. Die Übertragung der Daten D durch die Sendeeinheit TX der Mobilstation MS in Aufwärtsrichtung sowie die Datenübertragung in Abwärtsrichtung erfolgt in Form von Funkblöcken (Bursts). Nach der Ermittlung der Vorhaltezeit TA in der Basisstation BS überträgt diese den Wert der Vorhaltezeit zur Mobilstation MS. Anschließend berücksichtigt die Mobilstation MS beim Aussenden ihrer Funkblöcke diese Vorhaltezeit und versendet ihre Funkblöcke gegenüber von ihr empfangenen Funkblöcken um die Vorhaltezeit versetzt.

Figur 1 zeigt weiterhin einen Basisstationscontroller RNC, der die Übergabe der Verbindung zwischen den Basisstationen steuert und unter anderem eine Kanalzuweisungseinheit U1 aufweist. (U1 in Basisstation BS streichen!)

Vor der Übergabe der Verbindung (Hand Over) teilt der Basisstationscontroller RNC über die zweite Basisstation BS2 der Mobilstation MS mit, welcher Kanal ihr für die Verbindung mit der Basisstation BS, zu der die Verbindung übergeben werden soll, zugewiesen worden ist. Die Mobilstation MS ist dann in der Lage, sich auf diesen Kanal einzustellen. Die Kanäle des TD/CDMA-Systems sind insbesondere durch einen bestimmten Zeitschlitz und einen bestimmten Spreizcode definiert.

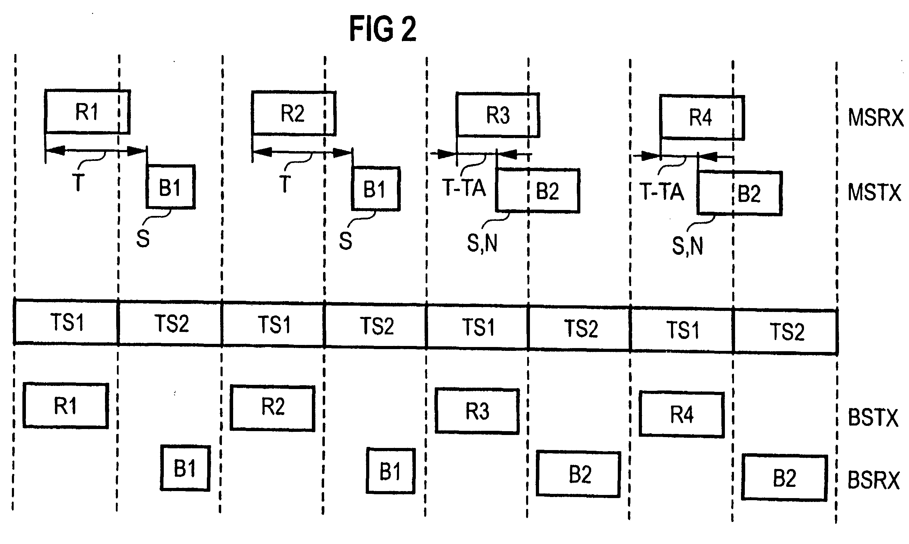

Figur 2 zeigt den Empfang und das Aussenden von Funkblöcken B1, B2, Ri in der Mobilstation MS und der Basisstation BS hinsichtlich ihrer zeitlichen Lage bezüglich Zeitschlitzen TS1, TS2, die der Verbindung in Abwärts- bzw. Aufwärtsrichtung zugewiesen worden sind. In der mittleren Zeile der Figur 2 sind diese Zeitschlitze TS für vier aufeinander folgende Zeitrahmen in einer vereinfachenden Darstellung abgebildet worden. Es handelt sich also hier nicht um acht verschiedene Zeitschlitze eines Zeitrahmens. Die der Verbindung nicht zugewiesenen Zeitschlitze der Zeitrahmen sind in der Figur 2 nicht eingezeichnet worden. Ausserdem wurden die zeitlichen Verhältnisse der besseren Verständlichkeit wegen stark vereinfacht dargestellt. In der ersten Zeile der Figur 2 sind Empfangsfunkblöcke MSRX eingezeichnet, wie sie von der Empfangseinheit RX der Mobilstation MS empfangen werden. In der zweiten Zeile sind die Sendefunkblöcke MSTX der Mobilstation MS dargestellt, wie sie von dieser ausgesendet werden. In der vierten Zeile sind die Sendefunkblöcke BSTX der Basisstation BS und in der fünften Zeile die Empfangsfunkblöcke BSRX der Basisstation BS dargestellt. Da sich die Mobilstation MS auf die Basisstation BS synchronisieren muß, muß erreicht werden, dass die von der Mobilstation MS ausgesendeten Funkblöcke B1, B2 in der Basisstation BS im richtigen Zeitschlitz TS2 eintreffen.

Gemäß Figur 2 beginnt die Mobilstation MS direkt nach der Übergabe der Verbindung auf die Basisstation BS mit der Aussendung kurzer Funkblöcke B1. Die Basisstation BS überträgt zur Mobilstation MS Funkblöcke Ri im Zeitschlitz TS1 jedes Rahmens. Diese Funkblöcke Ri werden in der Mobilstation MS um die Signallaufzeit verzögert empfangen (MSRX). Um die ersten Funkblöcke B1 im richtigen Zeitschlitz TS2 zu übertragen, orientiert sich die Mobilstation MS am Zeitraster der empfangenen Funkblöcke Ri. Die von der Mobilstation MS ausgesendeten Funkblöcke MSTX kommen in der Basisstation BS wiederum um die Signallaufzeit verzögert an. Dadurch, dass die kurzen Funkblöcke B1 entsprechend kurz im Vergleich zur Länge des Zeitschlitzes TS2 gewählt wurden, treffen sie in der Basisstation BS trotz der Verzögerung noch innerhalb des richtigen Zeitschlitzes TS2 ein.

Anhand der empfangenen kurzen Funkblöcke B1 ermittelt die Basisstation BS mittels ihrer Synchronisiereinheit SYNCH die Vorhaltezeit TA und übermittelt diese zur Mobilstation MS. Nachdem die Mobilstation MS die Vorhaltezeit TA von der Basisstation BS empfangen hat, berücksichtigt sie diese bei den anschließenden Aussendungen. Sie sendet die folgenden Funkblöcke B2 um die Vorhaltezeit TA verschoben gegenüber dem Zeitraster T bei Empfangsfunkblöcken MSRX. Die Berücksichtigung der Vorhaltezeit TA bei der Aussendung der Funkblöcke B2 hat zur Folge, dass der Beginn dieser Funkblöcke B2 in der empfangenden Basisstation BS bereits zu Beginn des jeweiligen Zeitschlitzes TS eintrifft. Daher können die unter Berücksichtigung der Vorhaltezeit TA ausgesendeten Funkblöcke B2 länger gewählt werden als die kurzen Funkblöcke B1.

Beim in Figur 2 dargestellten Ausführungsbeispiel wird angenommen, dass in der Verbindung zwischen Mobilstation MS und Basisstation BS zweierlei Dienste übertragen werden sollen, nämlich Signalisierungsinformationen S und Sprachdaten N. Da die kurzen Funkblöcken B1 nur eine geringe Datenrate pro Zeitschlitz TS zulassen als die langen Funkblöcke B2, werden in den kurzen Funkblöcke B1 lediglich die Signalisierungsinformationen S (also die Daten des ersten Dienstes) und in den langen Funkblöcken B2 die Daten sämtlicher Dienste übertragen.

Selbstverständlich ist es auch möglich, dass über die Verbindung zwischen Mobilstation MS und Basisstation BS lediglich die Daten eines Dienstes, beispielsweise Sprachdaten übertragen werden sollen. Dann muß wiederum das Problem gelöst werden, dass mit den kurzen Funkblöcken B1 weniger Daten pro Zeitschlitz TS übertragen werden können, als mit den langen Funkblöcken B2. Figur 3 zeigt zwei Lösungen für dieses Problem.

Figur 3 ist der Aufbau der Codierungseinheit COD der Mobilstation MS aus Figur 1 zu entnehmen. Die Codierungseinheit COD enthält einen Quellencodierer VC sowie einen diesem nachgeschalteten Kanalcodierer CHC. Einem Eingang der Codierungseinheit COD werden analoge Sprachsignale V zugeführt, die den zu übertragenden Daten D entsprechen. Der Quellencodierer VC enthält zwei unterschiedliche Sprachcodierer VC1, VC2, die die Sprachsignale V mit unterschiedlicher Codierrate codieren. Die Sprachcodierer VC1, VC2 sind eingangsseitig über einen Multiplexer M1 mit dem Eingang der Codierungseinheit COD und ausgangsseitig über einen Demultiplexer D1 mit dem Ausgang des Quellencodierers VC verbunden. Der erste Sprachcodierer VC1 liefert beispielsweise an seinem Ausgang eine Datenrate von 13kbit/Sekunde. Der zweite Sprachcodierer VC2 liefert lediglich eine Datenrate von 6,5kbit/Sekunde. Durch den Einsatz des ersten Sprachcodierers VC1 mit der hohen Codierrate werden also pro Zeiteinheit doppelt so viele quellencodierte Daten erzielt, wie durch Verwendung des zweiten Sprachcodierers VC2. Bei der Übertragung der langen Funkblökke B2 werden die darin enthaltenen Daten durch den ersten Sprachcodierer VC1 mit der hohen Codierrate quellencodiert. Für die kurzen Funkblöcke B1 geschieht die Quellencodierung mittels des zweiten Sprachcodierers VC2 mit der geringeren Codierrate.

Der Kanalcodierer CHC in Figur 3 beinhaltet eine erste Kanalcodiereinheit CHC1 und eine zweite Kanalcodiereinheit CHC2. Diese sind über einen Multiplexer M2 mit dem Eingang und einem Demultiplexer D2 mit dem Ausgang des Kanalcodierers CHC verbunden. Über eine Antenne A erfolgt die Aussendung der Funkblöcke. Die Codierrate der ersten Kanalcodiereinheit CHC1 ist geringer als diejenige der zweiten Kanalcodiereinheit CHC2. Dies ist durch eine stärkere Fehlerschutzcodierung durch die erste Kanalcodiereinheit CHC1 bedingt. Diese fügt den quellencodierten Daten also eine größere Anzahl von Fehlerschutzbits hinzu, als es die zweite Kanalcodiereinheit CHC2 tut. Für die mit den langen Funkblöcken B2 übertragenen Daten erfolgt die Kanalcodierung durch die erste Kanalcodiereinheit CHC1, während für die kurzen Funkblöcke B1 die Kanalcodierung über die zweite Kanalcodiereinheit CHC2 erfolgt.

Durch die Verwendung der unterschiedlichen Codierraten in der Quellencodierung beziehungsweise Kanalcodierung erfolgt eine unterschiedliche Datenrate der über die Funkschnittstelle zu übertragenden Daten D. Hierdurch wird die unterschiedliche Länge der Funkblöcke B1, B2 ermöglicht. Bei anderen Ausführungsbeispielen der Erfindung kann natürlich auch nur entweder die Quellencodierrate oder die Kanalcodierrate veränderbar sein.

Figur 5 zeigt den Aufbau eines der Funkblöcke B1, B2. Zwischen zwei Datenteilen D1, D2 ist als Trainingssequenz Ni eine Mittambel eingefügt, die im Empfänger der Durchführung einer Kanalschätzung dient.

Weiterhin zeigt die Figur 4 mehrere Trainingssequenzen M1 bis M3, die durch Rotation aus dem Trainingssequenzgrundcode M0 erzeugt worden sind. Der Trainingssequenzgrundcode M0 weist n Chips auf. Durch die Rotation R in Gegenuhrzeigerrichtung werden die unterschiedlichen Trainingssequenzen Mi erzeugt. Jeder Verbindung in der Funkzelle der Basisstation BS ist eine der Trainingssequenzen Mi zugeordnet. Die der jeweiligen Verbindung zugewiesene Trainingssequenz Mi ist in jedem der dieser Verbindung zugeordneten Funkblöcke B1, B2 enthalten. Bei diesem Ausführungsbeispiel werden sämtliche Trainingssequenzen Mi (und damit die Maximalanzahl der gleichzeitig möglichen Verbindungen) jedoch nur während der Aussendung der langen Funkblöcke B2 durch die Mobilstation verwendet. Während der Aussendung der kurzen Funkblöcke B1 wird nur jede zweite Trainingssequenz M1, M3, ... verwendet, so dass nur die halbe Anzahl der maximal in der Funkzelle möglichen Verbindungen unterhalten werden kann. Dadurch wird eine Verwechslung der unterschiedlichen Trainingssequenzen Mi aufgrund der Signallaufzeit beim Empfang in der Basisstation BS vermieden.

Die Länge der kurzen Funkblöcke B1 kann beispielsweise mit der Länge von im RACH übertragenen Access Bursts übereinstimmen.

Die Erfindung eignet sich zur Anwendung bei Verbindungsübergaben (Hand Over) zwischen beliebigen nicht miteinander synchronisierten Basisstationen, beispielsweise von einer FDD- oder GSM-Basisstation auf eine TDD-Basisstation oder von einer TDD-Basisstation auf eine andere TDD-Basisstation eines andern Mobilfunknetzes. Sie ist auch beim Aufbau einer Verbindung anwendbar.

## Patentansprüche

1. Verfahren zum Betrieb einer Verbindung zwischen zwei Stationen (MS, BS) eines Mobilfunksystems,
bei dem
- Daten (D) von Diensten der Verbindung in Form von Funkblöcken (B1, B2) in einem Zeitraster (TS) übertragen werden,
- zur Synchronisierung der Stationen (MS, BS) eine Vorhaltezeit (TA) empfangen oder ermittelt wird, mit der die erste Station (MS) Funkblöcke versetzt gegenüber von ihr empfangenen Funkblöcken (Ri) aussendet,
- vor dem Empfang der Vorhaltezeit oder vor der Ermittlung der Vorhaltezeit die Daten (D) von der ersten Station (MS) ohne die Vorhaltezeit in Form kurzer Funkblöcke (B1) übertragen werden,
- nach dem Empfang der Vorhaltezeit oder nach der Ermittlung der Vorhalterzeit die Daten (D) von der ersten Station (MS) unter Berücksichtigung der Vorhaltezeit in Form langer Funkblöcke (B2) übertragen werden, die länger als die kurzen Funkblöcke (B1) sind,
- und sowohl die kurzen Funkblöcke (B1) als auch die langen Funkblöcke (B2) von der ersten Station (MS) in einem der Verbindung zugewiesenen Kanal übertragen werden.

2. Verfahren nach Anspruch 1, bei dem die Vorhaltezeit (TA) von der zweiten Station (ES) anhand der von der ersten Station (MS) zu ihr übertragenen kurzen Funkblöcke (B1) ermittelt wird.

3. Verfahren nach Anspruch 1 oder 2,
- bei dem die erste Station (MS) eine Mobilstation und die zweite Station (BS) eine erste Basisstation ist
- und das bei einer Übergabe der Verbindung von einer zweiten Basisstation (BS2) auf die erste Basisstation (BS) durchgeführt wird.

4. Verfahren nach einem der vorstehenden Ansprüche,
- das auf ein TDMA-Mobilfunksystem angewendet wird
- und bei dem der Kanal einem bestimmten Zeitschlitz (TS) zugeordnet ist, so dass die kurzen Funkblöcke (B1) und die langen Funkblöcke (B2) in diesem Zeitschlitz übertragen werden.

5. Verfahren nach Anspruch 4,
das auf ein CDMA-Mobilfunksystem angewendet wird
- und bei dem der Kanal einem bestimmten Spreizcode zugeordnet ist, so dass die kurzen Funkblöcke (B1) und die langen Funkblöcke (B2) mit diesem Spreizcode übertragen werden.

6. Verfahren nach einem der vorstehenden Ansprüche,
bei dem
- eine Quellencodierung (VC) der zu übertragenden Daten (D) erfolgt
- und die Codierrate der Quellencodierung (VC) für die in den kurzen Funkblöcken (B1) zu übertragenden Daten geringer ist als für die in den langen Funkblöcken (B2) zu übertragenden Daten.

7. Verfahren nach einem der vorstehenden Ansprüche,
bei dem
- eine Kanalcodierung (CHC) der zu übertragenden Daten (D) erfolgt
- und die Codierrate der Kanalcodierung (CHC) der in den kurzen Funkblöcken (B1) zu übertragenden Daten größer ist als für die in den..langen Funkblöcken (B2) zu übertragenden Daten.

8. Verfahren nach Anspruch 7,
bei dem die Sendeleistung der ersten Station (MS) während der Übertragung der kurzen Funkblöcke (B1) höher ist als während der Übertragung der langen Funkblöcke (B2).

9. Verfahren nach einem der vorstehenden Ansprüche,
bei dem
- mehrere Trainingssequenzen (Mi) durch unterschiedliche Rotationen (R) aus einem gemeinsamen Trainingssequenzgrundcode (M0) erzeugt werden,
- von Sendestationen des Funksystems innerhalb eines Zeitschlitzes (TS) ausgesendete Funkblöcke (B1, B2) unterschiedlicher Verbindungen jeweils eine der Trainingssequenzen (Mi) für die Durchführung einer Kanalschätzung im jeweiligen Empfänger (RX) enthalten
- und während der Ermittlung der Vorhaltezeit (TA) höchstens jede zweite in Richtung der Rotation (R) aufeinander folgende Trainingssequenz (M0, M2, ...) für jeweils eine in den jeweiligen Zeitschlitzen (TS) unterhaltene Verbindung benutzt wird.

10. Verfahren nach einem der vorstehenden Ansprüche,
bei dem
- der Verbindung wenigstens zwei unterschiedliche Dienste (S, N) zugeordnet sind,
- in den kurzen Funkblöcken nur ein Teil der Dienste (S) der Verbindung übertragen werden
- und in den langen Funkblöcken die wenigstens zwei Dienste (S, N) übertragen werden.

11. Mobilfunksystem
- mit wenigstens zwei Stationen (MS, BS), zwischen denen Daten (D) von Diensten einer Verbindung in Form von Funkblöcken (B1, B2) in einem Zeitraster (TS) übertragen werden,
- mit einer Zuweisungseinheit (U1) zum Zuweisen der Verbindung zu einem Kanal,
- mit einer Synchronisierungseinheit (SYNC), die zur Synchronisierung der Stationen (MS, BS) eine Vorhaltezeit (TA) ermittelt, mit dem die erste Station (MS) Funkblöcke versetzt gegenüber von ihr empfangenen Funkblöcken (Ri) aussendet,
- dessen erste Station (MS) eine Sendeeinheit (TX) aufweist, über die sie während der Ermittlung der Vorhaltezeit (TA) die Daten (D) ohne Vorhaltezeit in Form von kurzen Funkblöcken (B1) überträgt,
- bei dem die Sendeeinheit (TX) der ersten Station (MS) nach der Ermittlung der Vorhaltezeit (TA) die Daten (D) unter Berücksichtigung der ermittelten Vorhaltezeit in Form von langen Funkblöcken (B2) überträgt, die länger als die kurzen Funkblöcke. (B1) sind,
- und bei dem die Sendeeinheit (TX) der ersten Station (MS) sowohl die kurzen Funkblöcke (B1) als auch die langen Funkblöcke (B2) in dem Kanal überträgt.

12. Station (MS) für ein Mobilfunksystem
- mit einer Sendeeinheit (TX) zum Übertragen von Daten (D) von Diensten einer Verbindung in Form von Funkblöcken (B1, B2) in einem Zeitraster (TS) eines der Station (MS) zugewiesenen Kanals,
- mit einer Empfangseinheit (RX) zum Empfang einer Vorhaltezeit (TA), mit dem die Sendeeinheit (TX) Funkblöcke (B2) versetzt gegenüber von der Station empfangenen Funkblöcken (Ri) aussendet zur Synchronisierung mit einer weiteren Station (BS),
- deren Sendeeinheit (TX) vor dem Empfang der Vorhaltezeit (TA) die Daten (D) ohne Vorhaltezeit in Form von kurzen Funkblöcken (B1) überträgt,
- deren Sendeeinheit (TX) nach dem Empfang der Vorhaltezeit (TA) die Daten (D) unter Berücksichtigung der Vorhaltezeit in Form von langen Funkblöcken (B2) überträgt, die länger als die kurzen Funkblöcke sind,
- und deren Sendeeinheit (TX) sowohl die kurzen Funkblöcke (B1) als auch die langen Funkblöcke (B2) in dem Kanal überträgt.

## Claims

1. Method for operating a connection between two stations (MS, BS) of a mobile radio telephone system,
in which
- data (D) of services of the connection is transmitted in the form of radio blocks (B1, B2) in a timing pattern (TS),
- for synchronizing the stations (MS, BS), a timing advance (TA) with which the first station (MS) emits radio blocks with an offset with respect to radio blocks (Ri) received by it is received or determined,
- before the reception of the timing advance or before the determination of the timing advance, the first station (MS) transmits the data (D) in the form of short radio blocks (B1) without the timing advance,
- after the reception of the timing advance or after the determination of the timing advance, the first station (MS) transmits the data (D), taking into account the timing advance, in the form of long radio blocks (B2) which are longer than the short radio blocks (B1),
- and both the short radio blocks (B1) and the long radio blocks (B2) are transmitted by the first station (MS)in a channel which is assigned to the connection.

2. Method according to Claim 1, in which the timing advance (TA) is determined by the second station (BS) by reference to the short radio blocks (B1) transmitted to it by the first station (MS).

3. Method according to Claim 1 or 2,
- in which the first station (MS) is a mobile station, and the second station (BS) is a first base station
- and which is carried out while the connection is handed over from a second base station (BS2) to the first base station (BS).

4. Method according to one of the preceding claims,
- which is applied to a TDMA mobile radio system,
- and in which the channel is assigned to a specific time slot (TS) so that the short radio blocks (B1) and the long radio blocks (B2) are transmitted in this time slot.

5. Method according to Claim 4,
- which is applied to a CDMA mobile radio system,
- and in which the channel is assigned to a specific spread code so that the short radio blocks (B1) and the long radio blocks (B2) are transmitted with this spread code.

6. Method according to one of the preceding claims, in which
- source coding (VC) of the data (D) to be transmitted takes place,
- and the coding rate of the source coding (VC) for the data to be transmitted in the short radio blocks (B1) is lower than for the data to be transmitted in the long radio blocks (B2).

7. Method according to one of the preceding claims, in which
- channel coding (CHC) of the data (D) to be transmitted takes place,
- and the coding rate of the channel coding (CHC) of the data to be transmitted in the short radio blocks (B1) is higher than for the data to be transmitted in the long radio blocks (B2).

8. Method according to Claim 7, in which the transmitting power of the first station (MS) during the transmission of the short radio blocks (B1) is higher than during the transmission of the long radio blocks (B2).

9. Method according to one of the preceding claims, in which
- a plurality of training sequences (Mi) are generated from a common training sequence basic code (M0) by means of different rotations (R),
- radio blocks (B1, B2), emitted by transmitter stations of the radio system within a time slot (TS), of different connections each contain one of the training sequences (Mi) for carrying out a channel estimation in the respective receiver (RX),
- and, during the determination of the timing advance (TA), at most every second successive training sequence (M0, M2, ...) in the direction of the rotation (R) is used for, in each case, one connection maintained in the respective time slots (TS).

10. Method according to one of the preceding claims, in which
- at least two different services (S, N) are assigned to the connection,
- only some of the services (S) of the connection are transmitted in the short radio blocks,
- and the at least two services (S, N) are transmitted in the long radio blocks.

11. Mobile radio telephone system,
- having at least two stations (MS, BS) between which data (D) of services of a connection is transmitted in the form of radio blocks (B1, B2) in a timing pattern (TS),
- having an allocation unit (U1) for allocating the connection to a channel,
- having a synchronizing unit (SYNC) which, in order to synchronize the stations (MS, BS), determines a timing advance (TA) with which the first station (MS) emits radio blocks with an offset with respect to radio blocks (Ri) received by it,
- whose first station (MS) has a transmitter unit (TX) via which, during the determination of the timing advance (TA), it transmits the data (D) in the form of short radio blocks (B1) without timing advance,
- in which, after the determination of the timing advance (TA), the transmitter unit (TX) of the first station (MS) transmits the data (D), taking into account the determined timing advance, in the form of long radio blocks (B2) which are longer than the short data blocks (B1),
- and in which the transmitter unit (TX) of the first station (MS) transmits both the short radio blocks (B1) and the long radio blocks (B2) in the channel.

12. Station (MS) for a mobile radio telephone system,
- having a transmitter unit (TX) for transmitting data (D) of services of a connection in the form of radio blocks (B1, B2) in a timing pattern (TS) of a channel which is assigned to the station (MS),
- having a receiver unit (RX) for receiving a timing advance (TA) with which the transmitter unit (TX) emits radio blocks (B2) with an offset with respect to radio blocks (Ri) received by the station, for the purpose of synchronization with a further station (BS),
- whose transmitter unit (TX) transmits, before the reception of the timing advance (TA), the data (D) in the form of short data blocks (B1) without timing advance,
- whose transmitter unit (TX) transmits, after the reception of the timing advance (TA), the data (D), taking into account the timing advance, in the form of long radio blocks (B2) which are longer than the short radio blocks,
- and whose transmitter unit (TX) transmits both the short radio blocks (B1) and the long radio blocks (B2) in the channel.

## Revendications

1. Procédé pour exploiter une connexion entre deux stations (MS, BS) d'un système radio mobile
dans lequel
- des données (D) de services de la connexion sont transmises sous la forme de blocs radio (B1, B2) dans un créneau temporel (TS);
- pour synchroniser les stations (MS, BS), une avance de temps (TA) est reçue ou déterminée, avec laquelle la première station (MS) émet des blocs radio avec un décalage par rapport à des blocs radio (Ri) reçus par elle;
- avant la réception de l'avance de temps ou avant la détermination de l'avance de temps, les données (D) sont transmises par la première station (MS) sans l'avance de temps sous la forme de blocs radio courts (B1);
- après la réception de l'avance de temps ou après la détermination de l'avance de temps, les données (D) sont transmises par la première station (MS), compte tenu de l'avance de temps, sous la forme de blocs radio longs (B2) qui sont plus longs que les blocs radio courts (B1) et
- non seulement les blocs radio courts (B1), mais aussi les blocs radio longs (B2) sont transmis par la première station (MS) dans un canal alloué à la connexion.

2. Procédé selon la revendication 1,
dans lequel l'avance de temps (TA) est déterminée par la deuxième station (BS) à l'aide des blocs radio courts (B1) qui lui sont transmis par la première station (MS).

3. Procédé selon la revendication 1 ou 2,
- dans lequel la première station (MS) est une station mobile et la deuxième station (BS) est une première station de base et
- qui est mis en oeuvre lors d'un transfert de la connexion d'une deuxième station de base (BS2) à la première station de base (BS).

4. Procédé selon l'une des revendications précédentes,
- qui est appliqué à un système radio mobile TDMA et
- dans lequel le canal est affecté à un créneau temporel (TS) déterminé de sorte que les blocs radio courts (B1) et les blocs radio longs (B2) sont transmis dans ce créneau temporel.

5. Procédé selon la revendication 4,
- qui est appliqué à un système radio mobile CDMA et
- dans lequel le canal est affecté à un code d'étalement déterminé de sorte que les blocs radio courts (B1) et les blocs radio longs (B2) sont transmis avec ce code d'étalement.

6. Procédé selon l'une des revendications précédentes,
dans lequel
- a lieu un codage source (VC) des données (D) à transmettre et
- le taux de codage du codage source (VC) est plus petit pour les données à transmettre dans les blocs radio courts (B1) que pour les données à transmettre dans les blocs radio longs (B2).

7. Procédé selon l'une des revendications précédentes,
dans lequel
- a lieu un codage de canal (CHC) des données (D) à transmettre et
- le taux de codage du codage de canal (CHC) des données à transmettre dans les blocs radio courts (B1) est plus grand que pour les données à transmettre dans les blocs radio longs (B2).

8. Procédé selon la revendication 7,
dans lequel la puissance d'émission de la première station (MS) est plus élevée pendant la transmission des blocs radio courts (B1) que pendant la transmission des blocs radio longs (B2).

9. Procédé selon l'une des revendications précédentes,
dans lequel
- plusieurs séquences d'apprentissage (Mi) sont produites par des rotations (R) différentes à partir d'un code de base commun de séquences d'apprentissage (M0),
- des blocs radio (B1, B2) de connexions différentes, émis par des stations émettrices du système radio à l'intérieur d'un créneau temporel (TS), contiennent respectivement l'une des séquences d'apprentissage (Mi) pour l'exécution d'une estimation de canal dans le récepteur respectif (RX) et
- pendant la détermination de l'avance de temps (TA) tout au plus une séquence d'apprentissage successive (M0, M2, ...) sur deux dans le sens de la rotation (R) est utilisée pour respectivement une connexion entretenue dans les créneaux temporels (TS) respectifs.

10. Procédé selon l'une des revendications précédentes,
dans lequel
- au moins deux services différents (S, N) sont affectés à la connexion,
- seule une partie des services (S) de la connexion est transmise dans les blocs radio courts et
- les au moins deux services (S, N) sont transmis dans les blocs radio longs.

11. Système radio mobile
comprenant
- au moins deux stations (MS, BS) entre lesquelles des données (D) de services d'une connexion sont transmises sous la forme de blocs radio (B1, B2) dans un créneau temporel (TS),
- une unité d'allocation (U1) pour allouer la connexion à un canal,
- une unité de synchronisation (SYNC) qui détermine une avance de temps (TA) pour synchroniser les stations (MS, BS), avec laquelle la première station (MS) émet des blocs radio avec un décalage par rapport à des blocs radio (Ri) reçus par elle,
- dont la première station (MS) comporte une unité émettrice (TX) par l'intermédiaire de laquelle elle transmet les données (D) sans avance de temps sous la forme de blocs radio courts (B1) pendant la détermination de l'avance de temps (TA),
- dans lequel l'unité émettrice (TX) de la première station (MS), après la détermination de l'avance de temps (TA), transmet les données (D), compte tenu de l'avance de temps déterminée, sous la forme de blocs radio longs (B2) qui sont plus longs que les blocs radio courts (B1) et
- dans lequel l'unité émettrice (TX) de la première station (MS) transmet dans le canal non seulement les blocs radio courts (B1), mais aussi les blocs radio longs (B2).

12. Station (MS) pour un système radio mobile, comprenant
- une unité émettrice (TX) pour transmettre des données (D) de services d'une connexion sous la forme de blocs radio (B1, B2) dans un créneau temporel (TS) d'un canal alloué à la station (MS),
- une unité réceptrice (RX) pour recevoir une avance de temps (TA) avec laquelle l'unité émettrice (TX) émet des blocs radio (B2) avec un décalage par rapport à des blocs radio (Ri) reçus par la station, pour synchronisation avec une autre station (BS),
- dont l'unité émettrice (TX), avant la réception de l'avance de temps (TA), transmet les données (D) sans avance de temps sous la forme de blocs radio courts (B1),
- dont l'unité émettrice (TX), après la réception de l'avance de temps (TA), transmet les données (D), compte tenu de l'avance de temps, sous la forme de blocs radio longs (B2) qui sont plus longs que les blocs radio courts et
- dont l'unité émettrice (TX) transmet dans le canal non seulement les blocs radio courts (B1), mais aussi les blocs radio longs (B2).
